## Europäisches Patentamt
## European Patent Office
## Office européen des brevets

(19)

(11) Veröffentlichungsnummer: **0 122 368**
**B1**

(12) **EUROPÄISCHE PATENTSCHRIFT**

(45) Veröffentlichungstag der Patentschrift:
26.11.86

(21) Anmeldenummer: **84100490.6**

(22) Anmeldetag: **18.01.84**

(51) Int. Cl.⁴: **E 04 B  5/55,** E 04 F  13/08,
F 16 B  5/02

(54) **Schraubverbindung mit Schraubenkopfhalterung und Verfahren zur einstellbaren Abstandsbefestigung von Teilen.**

(30) Priorität: **25.01.83  DE 3302272**

(43) Veröffentlichungstag der Anmeldung:
**24.10.84 Patentblatt 84/43**

(45) Bekanntmachung des Hinweises auf die Patenterteilung:
**26.11.86 Patentblatt 86/48**

(84) Benannte Vertragsstaaten:
**AT BE CH DE FR GB IT LI NL**

(56) Entgegenhaltungen:
**EP-A-0 013 917
CH-A-596 463
DE-A-2 931 021
DE-A-3 047 902
DE-U-7 709 012
DE-U-8 123 802
DE-U-8 225 144
DE-U-8 322 151**

(73) Patentinhaber: **Blos, Alfred, Püscheldorf 18, D-8561
Offenhausen (DE)**

(72) Erfinder: **Blos, Alfred, Püscheldorf 18, D-8561
Offenhausen (DE)**

(74) Vertreter: **Schmid, Berthold, Patentanwälte Dipl.-
Ing. B. Schmid Dr. Ing. G. Birn Dipl.- Phys. H.
Quarder Falbenhennenstrasse 17, D-7000
Stuttgart 1 (DE)**

EP 0 122 368 B1

LIBER, STOCKHOLM 1986

## Beschreibung

Üblicherweise wird vor Anbringung einer Decken- oder Wandverkleidung ein Gerüst aus Holzlatten am Baukörper befestigt. Dabei werden Unebenheiten durch Unterlegen ausgeglichen. Um diesen Niveauausgleich zu vereinfachen, werden bereits Schraubverbindungen mit Schraubenkopfhalterungen verwendet, wobei die hülsenartige Halterung in einem Sackloch mit Durchbohrung für den Schraubenschaft des einen Teils, also beispielsweise der Holzlatte festgelegt ist. Man kann dann den Abstand zwischen den Teilen durch mehr oder weniger tiefes Einschrauben der Schraube den Gegebenheiten anpassen. Dabei weist die Halterung eine Auflagefläche für die Unterfläche und einen die Stirnfläche des Schraubenkopfes hintergreifenden Bund auf. Bei der bekannten Ausführungsform DE-U-8 123 802 wird die Halterung im Grund des Sackloches durch Zusatzschrauben festgelegt und nach Einsetzen der Schraube der Schraubenkopf durch den Bund einer zusätzlich zu befestigenden Abstützscheibe gehalten. Diese Schraubverbindung ist sehr aufwendig, weil einerseits die Halterung aus zwei Teilen besteht und andererseits beide Teile durch Zusatzschrauben befestigt werden müssen.

Die Aufgabe der vorliegenden Erfindung ist es eine grundsätzliche Vereinfachung einer derartigen Halterung und vor allem auch der Montage zu erreichen. Erfindungsgemäß ist mindestens der Bund der einteiligen Halterung elastisch gestaltet und bildet mit dem Schraubenkopf einen Schnappverschluß, wobei der Außendurchmesser des Bundes etwa dem Innendurchmesser des Sackloches entspricht. Der Schraubenkopf wird in die erfindungsgemäße Halterung beim Einschrauben hineingezogen, wobei der Bund federnd zurückspringt und dann den Schraubenkop übergreift. Bei größerem Kraftaufwand besteht jedoch die Gefahr, daß der Schraubenkopf infolge der Elastizität des Bundes wieder herausgedrückt werden kann. Durch die entsprechende Anpassung des Außendurchmessers des Bundes an das Sackloch kann die Halterung jedoch bis zum Bund in das Sackloch hineingezogen werden, so daß dieser durch die Sacklochwand unnachgiebig gehalten und damit ein Austreten des Schraubenkopfes unmöglich gemacht wird. Bei gleichwertiger Schraubenkopfsicherung ergibt sich gegenüber dem bekannten Stand der Technik der Vorteil einer einteiligen Halterung, welche keine zusätzlichen Befestigungsmittel benötigt und daher auch einfacher, d.h. ohne zusätzliche vorarbeiten zu montieren ist. Vorzugsweise ist der Außendurchmesser der Halterung mindestens am Bund geringfügig größer als der Innendurchmesser des Sackloches gestaltet, so daß beim Einziehen der Halterung in das entsprechende Teil der Bund durch das Sackloch leicht zusammengepreßt und eine noch festere Verankerung des Schraubenkopfes erreicht wird. Um das Einziehen der Halterung in das Sackloch zu erleichtern, ist die Halterung mindestens teilweise konisch geformt.

Insbesondere bei der Verwendung von Zylinderkopfschrauben wird das Einziehen des Schraubenkopfes in die Halterung erleichtert, wenn der Bund innen ebenfalls konisch gestaltet ist, wobei die am Schraubenkopf anliegende Fläche größer ist. Zur besseren Sicherung der Halterung gegen Herausdrücken aus dem Sackloch ist diese außen mit widerhakenförmigen Ringrippen versehen. Die Elastizität des Bundes läßt sich außer durch die Wahl eines entsprechenden Materials auch durch die Anordnung von Längsschlitzen erreichen.

Durch die Verwendung der erfindungsgemäßen Halterung ergibt sich ein besonders einfaches Verfahren zur Abstandsbefestigung, welches in Anspruch 7 beschrieben ist.

Die Zeichnung zeigt Ausführungsbeispiele der Erfindung. Es stellen dar

Fig. 1 den Schnitt einer Schraubverbindung.

Fig. 2 eine Draufsicht auf die Halterung nach Fig. 1

Fig. 3 eine Seitenansicht nach Fig. 2.

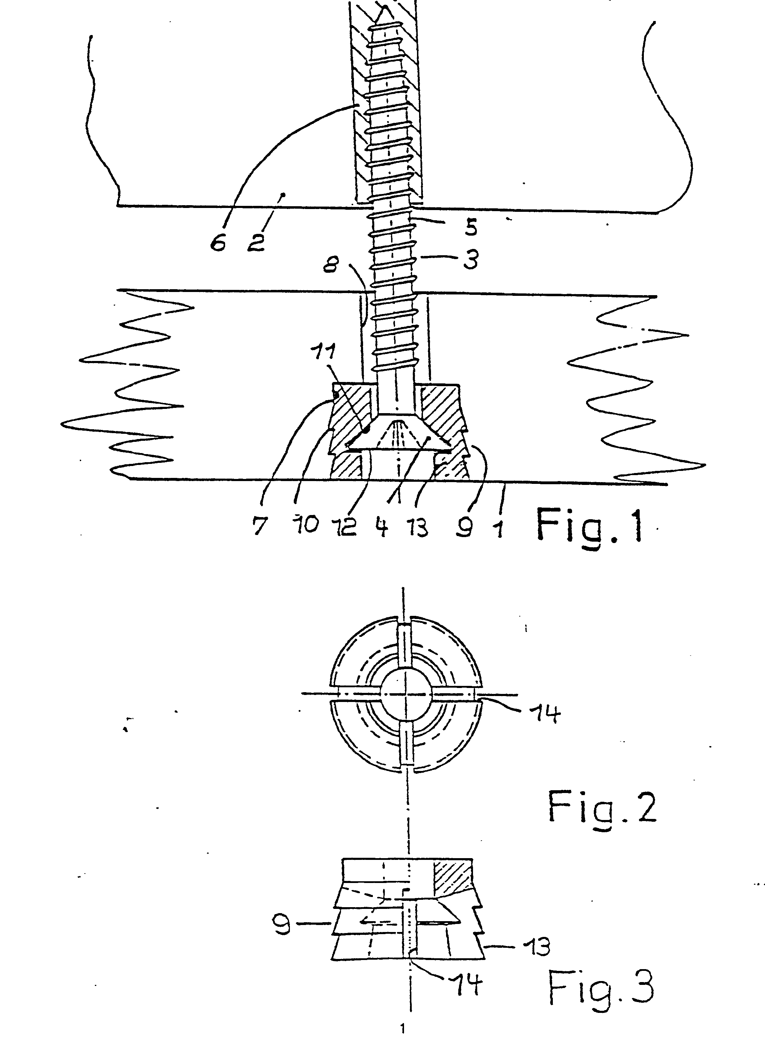

Bei der Schraubverbindung nach Fig. 1 ist die Holzlatte 1 an einer Wand 2 mittels einer Holzschraube 3 mit Senkkopf 4 befesigt. Die Schraube 3 greift dabei mit Schaft 5 in einen Dübel 6 der Wand 2 ein. Die Latte 1 ist mit einer Sackbohrung 7 versehen, in welche eine Durchbohrung 8 für den Schraubenschagt 5 mündet.

Zur Festlegung des Schraubenkopfes 4 in Längsrichtung dient eine Halterung 9, die hülsenförmig gestaltet und außen konisch geformt ist. Diese ist mit widerhakenförmigen Ringgrippen 10 versehen, welche ihre in der Sackbohrung 7 sichern. Für den Schraubenkopf 4 ist eine Auflagefläche 11 vorgesehen und er wird an seiner Stirnfläche 12 durch einem Bund 13 übergriffen. Der Bund 13 besteht aus elastischem Material und ist zur Erhöhung seiner Elastizität noch mit Längsschlitzen 14 versehen. Er ist in seinem Außendurchmesser geringügig größer gehalten als der Innendurchmesser der Sackbohrung 7.

Die Verbindung der Latte 1 mit dem Mauerwerk 2 erfolgt nach folgendem Verfahren. Zunächst einmal werden in die Holzlatte 1 die Sackbohrung 7 und die Durchbohrung 8 gebohrt und der Dübel 6 in die Wand 2 gesetzt. Anschließend wird der Schaft 5 der Schraube 3 durch die außerhalb des Sackbohrung 7 befindliche Halterung 9, dann durch die Dackbohrung 7 und die Durchbohrung 8 gesteckt und in den Dübel 6 der Wand 2 eingeschaubt. Während des Finschraubvorganges stützt sich die Halterung 9 entwender am Rande der Sackbohrung 7 oder innerhalb derselben mit den Ringrippen 10 so ab, daß sich der Bund 13 noch außerhalb der Sackbohrung 7 befindet. Beim weiteren Einschrauben wird dann der Schraubenkopf 4 in die Halterung 9 hineingezogen, wobei der Bund 13 elastisch nach außen ausweicht. Sobald die Unterfläche des Schraubenkopfes 4 gegen die Auflagefläche 11 gepreßt wird, schnappt der Bund 13 in seine ursprüngliche Lage zurück und sichert den Schraubenkopf 12 gegen ein Wiederaustreten nach oben. Anschließend wird die Halterung 9 vollständig in die Sackbohrung 7 hineingezogen, so daß der Bund 13 von den Außenwänden der Sackbohrung 7 infolge seines geringfügig größeren Durchmessers leicht zusammengrepreßt wird und der Schraubenkopf 4 in seiner in Fig. 1 dargestellten Lage einwandfrei fixiert wird. Anschließend kann dann der Abstand zwischen der Wand 2 und der Holzlatte 1 durch weiteres Hineindrehen oder aber Hinausdrehen entsprechend den Erfordernissen eingestellt werden.

**Patentansprüche**

1. Schraubverbindung mit Schraubenkopfhalterung zur einstellbaren Abstandsbefestigung von Teilen, insbesondere Decken- und Wandverkleidungen, wobei die hülsenartige Halterung (9) im einen Teil in einem Sackloch mit Durchbohrung (8) für den Schraubenschaft (5) festgelegt ist und eine Auflagefläche (11) für die Unterfläche und einen die Stirnfläche (12) des Schraubenkopfes (4) hintergreifenden Bund (13) aufweist, dadurch gekennzeichnet, daß mindestens der Bund (13) der einteiligen Halterung (9) elastisch gestaltet ist und mit dem Schraubenkopf (4) einen Schnappverschluß bildet, wobei der Außendurchmesser des Bundes (13) etwa dem Innendurchmesser des Sackloches (7) entspricht.

2. Schraubverbindung nach Anspruch 1, dadurch gekennzeichnet, daß der Außendurchmesser der Halterung (9) mindestens am Bund (13) geringfügig größer als der Innendurchmesser des Sackloches (7) gestaltet ist.

3. Schraubverbindung nach Anspruch 2, dadurch gekennzeichnet, daß die Halterung (9) mindestens teilweise konisch geformt ist.

4. Schraubverbindung nach einem der vorbergehenden Ansprüche, dadurch gekennzeichnet, daß der Bund (13) innen konisch ausgestaltet ist, wobei die am Schraubenkopf (4) anliegende Fläche größer ist.

5. Schraubverbindung nach einem der vorhergehenden Ansprüche, dadurch gekennzeichnet, daß die Halterung (9) aussen widerhakenförmige Ringgrippen (10) aufweist.

6. Schraubverbindung nach einem der vorhergehenden Ansprüche, dadurch gekennzeichnet, daß mindestens der Bund (13) der Halterung (9) in Längsrichtung angeordnete Schlitze (14) aufweist.

7. Verfahren zur Herstellung einer Schraubverbindung mit Schraubenkopfhalterung zur einstellbaren Abstandsbefestigung von Teilen nach einem der Ansprüche 1 bis 5, bei dem zunächst die Schraube mit ihrem Schaft durch eine hülsenartige Schraubenkopfhalterung mit die Stirnfläche des Schraubenkopfes übergreifendem Bund, dann durch das Sackloch mit Durchbohrung des einen Teils gesteckt und anschließend in das zweite Teil eingeschraubt wird, dadurch gekennzeichnet, daß sich während des Einschraubens die Halterung (9) bei freibleibendem Bund (13) zunächst am oder im Sackloch (7) abstützt und der Schraubenkopf (4) bei elastisch nachgebendem Bund (13) in die Halterung (9) eingezogen wird, worauf nach Anliegen des Schraubenkopfes (4) an seiner Auflagefläche (11) in der Halterung (9) der zurückschnappende Bund (13) die Stirnfläche (12) des Schraubenkopfes (4) fixierend übergreift, die Halterung (9) bis zum Bund (13) in das Sackloch (7) eingezogen wird und sich im Sackloch (7) festklemmt.

**Claims**

1. Screwed connection with a screw head holder for adjustably fixing parts at a distance from each other, particularly ceiling and wall faces, the sleeve-like holder (9) being fixed in one part in a blind hole with throughbore (8) for the screw shank (5) and a supporting surface (11) for the under side of and a shoulder (13) for engaging behind the end face (12) of the screw head (14), characterised in that at least the shoulder (13) of the one piece holder (9) is resilient and forms a snap-action closure with the screw head (4), the outside diameter of the shoulder (13) corresponding substantially to the inside diameter of the blind bore (7).

2. Screwed connection according to Claim 1, characterised in that the outside diameter of the holder (9) is at least at the shoulder (13) slightly greater than the inside diameter of the blind bore (7).

3. Screwed connection according to Claim 2, characterised in that the holder (9) is at least partially of conical shape.

4. Screwed connection according to one of the preceding Claims, characterised in that the shoulder (13) is conically formed on the inside, the surface bearing on the screw head (4) being larger.

5. Screwed connection according to one of the preceding Claims, characterised in that the holder (9) has on the outside barb-shaped annular ribs (10).

6. Screwed connection according to one of the preceding Claims, characterised in that at least the collar (13) of the holder (9) has longitudinally disposed slots (14).

7. Method of producing a screwed connection with a screw head holder for adjustably fixing parts at a distance from each other, according to one of Claims 1 to 5, wherein the shank of the screw is first passed through a sleeve-like screw head holder, a collar engagig over the end face of the screw head, and then through the blind bore with a throughbore in one part and is then screwed into the second part, characterised in that during the screwing-in the holder (9), while the shoulder (13) is left free, is first braced on or in the blind bore (7), the screw head (4) being drawn into the holder (9) while the shoulder (13) is left elastically resilient, whereupon after application of the screw head (4) against its supporting face (11) in the holder (9), the snapping-over shoulder (13) engages over and fixes the end face (12) of the screw head (4), the holder (9) being drawn into the blind bore (7) as far as the shoulder (13) and being clamped inside the blind bore (7).

**Revendications**

1.- Assemblage à vis, avec un dispositif de fixation d'une tête de vis pour la fixation à distance réglable de parties, en particulier de revêtements de plafonds et de parois, le dispositif de fixation (9) en forme de manchon étant fixé dans l'une des parties dans un trou borgne présentant une forure (8) passant de part en part pour le fût (5) de la vis et ayant une surface d'appui (11) pour la face inférieure de la vis, et un collet (13) passant par-dessus la surface frontale (12) de la tête (4) de la vis, caractérisé en ce qu'au moins le collet (13) du dispositif de fixation en une pièce (9) est fait élastique et forme avec la tête de vis (4) un assemblage à déclic, le diamètre extérieur du collet (13) correspondant à peu près au diamètre intérieur du trou borgne (7).

2.- Assemblage à vis suivant la revendication 1, caractérisé en ce que le diamètre extérieur du dispositif de fixation (9) est, au moins à l'endroit du collet (13) légèrement plus grand que le diamètre intérieur du trou borgne (7).

3.- Assemblage à vis suivant la revendication 2, caractérisé en ce que le dispositif de fixation (9) est au moins partiellement de forme conique.

4.-Assemblage à vis suivant l'une des revendications précédentes, caractérisé en ce que le collet (13) est conformé en cône à l'intérieur, la surface d'application à la tête de vis (4) étant relativement grande.

5.-Assemblage à vis suivant l'une des revendications précédentes, caractérisé en ce que le dispositif de fixation (9) présente extérieurement des nervures annulaires (10) en forme de crochets.

6.- Assemblage à vis suivant l'une des revendications précédentes, caractérisé en ce qu'au moins le collet (13) du dispositif de fixation (9) présente des fentes (14) disposées en direction longitudinale.

7.- Procédé pour l'établissement d'un assemblage à vis avec un dispositif de fixation de la tête de vis pour obtenir une fixation réglable en distance des parties, suivant l'une des revendications 1 à 5, dans lequel on enfonce d'abord la vis avec son fût dans un dispositif de fixation de tête de vis du genre d'un manchon, avec un collet passant par-dessus la face frontale de la tête de vis, puis on enfonce la vis à travers le trou borgne pourvu d'une forure passant de part en part d'une partie et ensuite on la visse dans la deuxième partie, caractérisé en ce que, pendant le vissage, le dispositif de fixation (9) prend appui d'abord par le collet (13) demeurant libre, sur ou dans le trou borgne (7) et en ce que la tête de vis (4) est tirée, tandis que le collet (13) cède élastiquement, dans le dispositif de fixation (9), après quoi, après application de la tête de vis (4) à sa surface d'appui (11) dans le dispositif de fixation (9), le collet (13) revenant avec déclic en arrière, passe par-dessus la surface frontale (12) de la tête de vis (4) en la fixant, le dispositif de fixation (9) étant tiré jusqu'au collet (13) dans le trou borgne (7) et se bloquant dans le trou borgne (7).

Fig.1

Fig.2

Fig.3